# FASCICULE DE BREVET EUROPEEN

(11) **EP 4 100 638 B1**
(45) Date de publication et mention de la délivrance du brevet: **31.05.2023**
(21) Numéro de dépôt: 21700243.5
(22) Date de dépôt: 14.01.2021
(51) Int. Cl.: F02K 1/64, F02K 1/72, F02K 3/06, F02K 1/66

(54) **SORTIE D'AIR DE NACELLE POUR TURBORÉACTEUR D'AÉRONEF COMPRENANT UN DISPOSITIF DE REDRESSEMENT POUR FAVORISER UNE PHASE D'INVERSION DE POUSSÉE**
LUFTAUSSTRÖMER FÜR EINE FLUGZEUGTRIEBWERKSGONDEL MIT EINER RICHTVORRICHTUNG ZUR UNTERSTÜTZUNG EINER RÜCKSCHUBPHASE
AIR OUTLET FOR AN AIRCRAFT TURBOJET ENGINE NACELLE COMPRISING A STRAIGHTENING DEVICE FOR SUPPORTING A REVERSE THRUST PHASE

(30) Priorité: 03.02.2020 FR 2001026
(43) Date de publication de la demande: 14.12.2022
(73) Titulaire: SAFRAN AIRCRAFT ENGINES, 75015 Paris (FR)
(72) Inventeur: CHANEZ, Philippe Gérard, 77550 MOISSY-CRAMAYEL (FR); MINCU, Daniel-Ciprian, 77550 MOISSY-CRAMAYEL (FR)
(74) Mandataire: Argyma
(86) Numéro de dépôt international: PCT/EP2021/050736
(87) Numéro de publication internationale: WO 2021/156036

(56) Documents cités:
- FR-A1- 2 120 172
- FR-A1- 2 162 257
- GB-A- 1 360 238
- US-A- 3 040 524

## Description

### Domaine technique

La présente invention concerne le domaine des turboréacteurs d'aéronef et vise plus particulièrement une sortie d'air de nacelle pour turboréacteur d'aéronef comprenant un dispositif de redressement pour favoriser une phase d'inversion de poussée.

De manière connue, un aéronef comprend un ou plusieurs turboréacteurs configurés pour permettre la propulsion de l'aéronef à partir de l'accélération d'un flux d'air circulant d'amont en aval dans chaque turboréacteur lors d'une phase de poussée, dit flux d'air intérieur. Par la suite, les termes « amont » et « aval » sont définis par rapport au sens de circulation du flux d'air intérieur lors d'une phase de poussée.

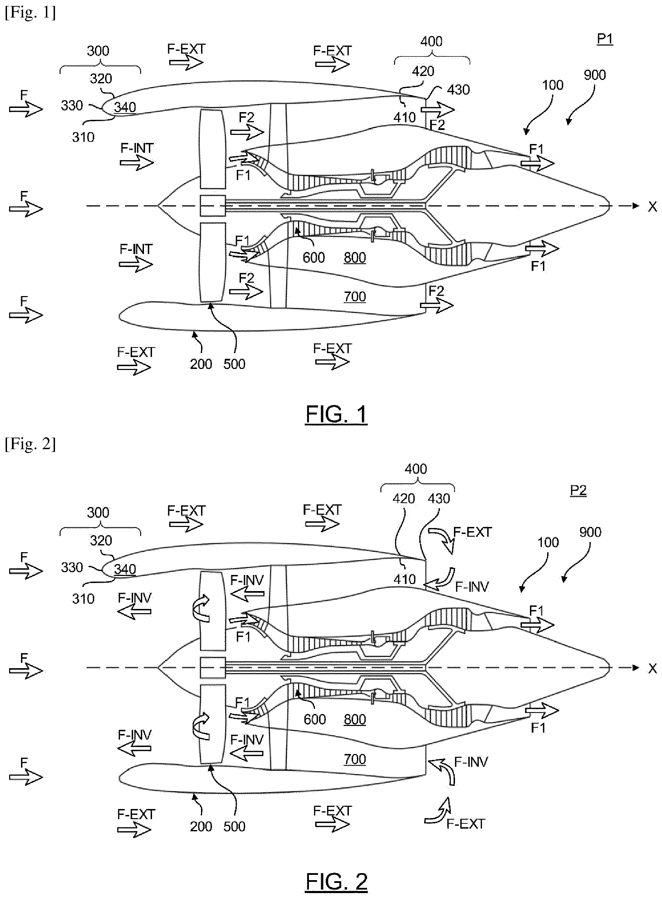

De manière connue, en référence à la [Fig.1], il est représenté un turboréacteur 100 d'aéronef à double flux s'étendant selon un axe longitudinal X et comprenant une soufflante 500 montée rotative autour de l'axe longitudinal X et configurée, lors d'une phase de poussée P1 du turboréacteur 100, pour accélérer le flux d'air intérieur F-INT. Le turboréacteur 100 comprend également en aval de la soufflante 500 une veine primaire 600, radialement intérieure, et une veine secondaire 700, radialement extérieure, qui sont séparées par un carter 800. Le carter 800 est configuré pour guider une première partie du flux d'air intérieur F-INT, dite flux d'air primaire F1, dans la veine primaire 600 pour la combustion du carburant et une deuxième partie du flux d'air intérieur F-INT, dite flux d'air secondaire F2, dans la veine secondaire 700 afin de générer la poussée du turboréacteur 100. Par la suite, les termes « intérieur » et « extérieur » sont définis selon la direction radiale par rapport à l'axe longitudinal X.

De manière connue, toujours en référence à la [Fig.1], il est représenté un ensemble propulsif d'aéronef 900 qui comprend un turboréacteur 100 et une nacelle 200 formant une révolution autour de l'axe longitudinal X du turboréacteur 100 de manière radialement extérieure à la soufflante 500 et délimitant de manière radialement extérieure la veine secondaire 700. La nacelle 200 comprend à son extrémité amont une entrée d'air 300 et à son extrémité aval une sortie d'air 400. L'entrée d'air 300 comprend une paroi intérieure amont 310 tournée vers l'axe longitudinal X et une paroi extérieure amont 320 opposée à la paroi intérieure amont 310, reliées ensemble à l'amont par une lèvre d'entrée d'air 330 comprenant un bord d'attaque, de manière à former une cavité annulaire amont 340. L'entrée d'air 300 possède un profil arrondi aérodynamique qui permet de séparer un flux d'air amont F en le flux d'air intérieur F-INT guidé par la paroi intérieure amont 310 et un flux d'air extérieur F-EXT guidé par la paroi extérieure amont 320.

De manière connue et analogue à l'entrée d'air 300, toujours en référence à la [Fig.1], la sortie d'air 400 de la nacelle 200 comprend une paroi intérieure aval 410 tournée vers l'axe longitudinal X et une paroi extérieure aval 420 opposée à la paroi intérieure aval 410, reliées ensemble à l'aval par un bord de fuite 430. La sortie d'air 400 comporte un profil effilé vers l'aval qui permet de guider le flux d'air secondaire F2 de la veine secondaire 700 vers l'extérieur du turboréacteur 100.

Pour réduire la distance de freinage d'un aéronef, notamment lors de l'atterrissage, il est connu d'intégrer dans une nacelle 200 un système d'inversion de poussée qui permet de modifier l'orientation du flux d'air secondaire F2 à l'échappement de manière à réaliser une phase d'inversion de poussée.

De manière connue, la phase d'inversion de poussée peut être réalisée par une ouverture de trappes et/ou grilles dans la veine secondaire 700, en aval de la soufflante 500, afin de reconduire le flux d'air secondaire vers l'extérieur du turboréacteur 100 de manière radiale par rapport à l'axe longitudinal X ou vers l'amont. Pour un turboréacteur 100 à fort taux de dilution, c'est-à-dire dont le rapport de la masse du flux d'air secondaire F2 sur la masse du flux d'air primaire F1 est supérieur à 16, la nacelle 200 comporte un diamètre important et il n'est pas souhaité d'intégrer un système d'inversion de poussée à trappes et/ou grilles étant donné que cela pénaliserait de manière importante la masse, l'encombrement et la traînée du turboréacteur 100.

Une autre solution pour réduire la distance de freinage d'un aéronef consiste à prévoir une soufflante 500 à pas variable, connue sous sa dénomination anglaise « Variable Pitch Fan », d'abréviation « VPF ». Une telle soufflante 500 comprend des aubes dont l'inclinaison angulaire est pilotée de manière à permettre d'inverser le sens de circulation du flux d'air secondaire F2 dans la veine secondaire 700 permettant la décélération de l'aéronef, notamment lors de l'atterrissage.

En référence à la [Fig.2], lors d'une phase d'inversion de poussée P2, un flux d'air inverse F-INV prélevé du flux d'air extérieur F-EXT est admis au niveau du bord de fuite 430 de la sortie d'air 400 de la nacelle 200 et circule d'aval en amont dans la veine secondaire 700, c'est-à-dire inversement au flux d'air secondaire F2 de la [Fig.1].

Le flux d'air inverse F-INV provenant de la veine secondaire 700 traverse ensuite la soufflante 500 et est guidé vers l'amont par la paroi intérieure amont 310 de l'entrée d'air 300. Le flux d'air inverse F-INV s'oppose alors au flux d'air amont F, notamment de manière radialement extérieure, ce qui permet un freinage. Dans certains cas, de même qu'en phase de poussée P1, un flux d'air intérieur F-INT provenant du flux d'air amont F circule d'amont en aval dans la nacelle 200, de manière radialement intérieure et en sens inverse par rapport au flux d'air inverse F-INV, afin d'alimenter le flux d'air primaire F1. Le flux d'air primaire F1 peut également être alimenté par une partie du flux d'air inverse F-INV qui contourne le carter 800.

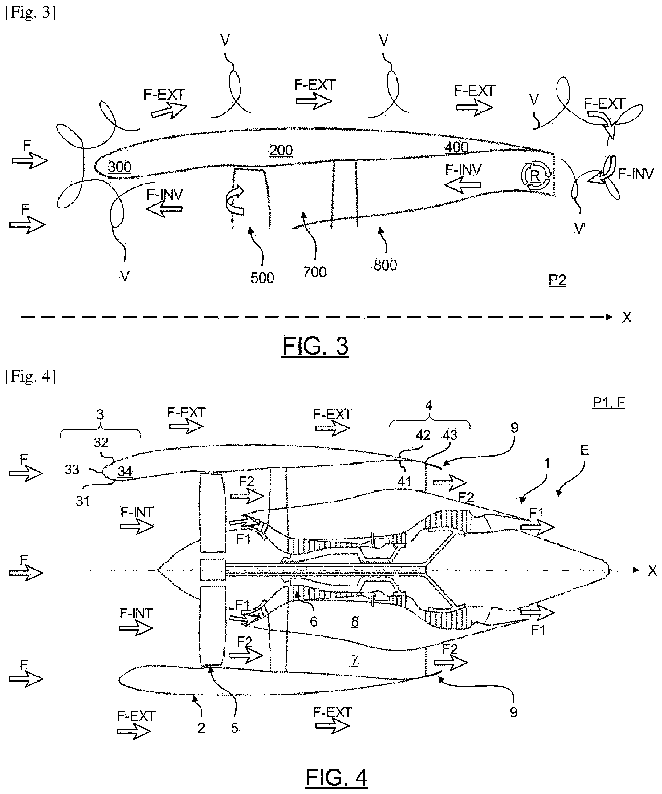

En pratique, comme illustré sur les figures 2 et 3, les aubes de la soufflante 500 entraînent le flux d'air inverse F-INV suivant un mouvement vrillé V d'axe longitudinal X au niveau de l'entrée d'air 300. Un tel mouvement vrillé V est susceptible d'être transmis au flux d'air extérieur F-EXT guidé par la paroi extérieure amont 320 de l'entrée d'air 300 et s'écoulant d'amont en aval le long de la nacelle 200. Le flux d'air extérieur F-EXT est ensuite prélevé au niveau de la sortie d'air 400 de la nacelle 200 pour former le flux d'air inverse F-INV. Le flux d'air inverse F-INV admis dans la veine secondaire 700 comporte ainsi également un mouvement vrillé V' transmis par le flux d'air extérieur F-EXT, ce qui n'est pas optimal car cela réduit les performances de l'inversion de poussée.

Par ailleurs, toujours en référence aux figures 2 et 3, le profil effilé de la sortie d'air 400, aérodynamique en phase de poussée P1, génère en phase d'inversion de poussée P2 des zones de recirculation R dans la veine secondaire 700 au niveau de la sortie d'air 400. Plus précisément, le flux d'air extérieur F-EXT provenant de l'amont se décroche de la paroi extérieure aval 420 et contourne le bord de fuite 430 pour entrer dans la sortie d'air 400 et former le flux d'air inverse F-INV. De telles zones de recirculation R réduisent la quantité de flux d'air inverse F-INV admise dans la sortie d'air 400, ce qui réduit les performances de l'inversion de poussée.

Pour augmenter la quantité de flux d'air inverse F-INV admise dans la sortie d'air 400, on connaît par la demande de brevet FR2120172A1, et plus précisément par la cinquième forme de réalisation illustrée sur les figures 11 et 12, une nacelle comprenant des volets montés en saillie sur la périphérie du bord de fuite de la sortie d'air. De tels volets sont montés pivotants selon un axe tangentiel orthogonal au rayon de la nacelle entre une position fermée adaptée pour une phase de poussée et une position déployée adaptée pour une phase d'inversion de poussée. Plus précisément, dans la position fermée, les volets s'étendent selon l'axe de la nacelle dans le prolongement de la sortie d'air tandis que dans la position déployée, les volets s'étendent suivant une direction radiale tournée vers l'extérieur de la nacelle. Un flux d'air inverse F-INV ayant un mouvement vrillé V est susceptible d'être admis dans le turboréacteur 1.

De manière incidente, on connaît par la même demande de brevet, et plus précisément par la première forme de réalisation illustrée sur les figures 1 à 3, une nacelle comprenant un système d'inversion de poussée monté dans une ouverture périphérique médiane formée dans la nacelle en aval de la soufflante. Ce système d'inversion de poussée comprend des clapets montés à la périphérie de l'ouverture au moyen de pivots d'axe parallèle à l'axe de la nacelle qui sont fixés en amont et en aval de l'ouverture. Les clapets sont montés pivotants entre une position fermée adaptée à une phase de poussée, dans laquelle les clapets se chevauchent de manière à fermer l'ouverture dans la paroi de la nacelle, et une position déployée adaptée à une phase d'inversion de poussée, dans laquelle les clapets s'étendent sensiblement radialement par rapport à l'axe de la nacelle. Un tel système d'inversion de poussée n'est toutefois pas envisageable pour un turboréacteur 100 à fort taux de dilution car cela pénaliserait de manière importante la masse, l'encombrement et la traînée du turboréacteur 100.

De manière incidente, il est connu par la demande de brevet US3040524A un mécanisme d'inversion de poussée monté pivotant sur le carter extérieur du turboréacteur de manière à s'étendre en position d'opération :
- dans la sortie d'air de la nacelle dans la forme de réalisation illustrée sur la figure 1 ou
- dans une ouverture de la nacelle dans la forme de réalisation des figures 3 et 4. Une telle demande de brevet ne concerne pas une nacelle et, encore moins, une sortie d'air. Du document GB1360238 il est connu un mécanisme d'inversion de poussée.

L'invention vise ainsi une sortie d'air de nacelle pour turboréacteur d'aéronef à double flux permettant d'augmenter les performances du turboréacteur lors d'une phase d'inversion de poussée, sans réduire les performances en phase de poussée.

### PRESENTATION DE L'INVENTION

L'invention concerne une sortie d'air de nacelle pour turboréacteur d'aéronef à double flux, ledit turboréacteur s'étendant selon un axe longitudinal et comprenant une veine primaire radialement intérieure et une veine secondaire radialement extérieure dans laquelle circule un flux d'air secondaire de l'amont vers l'aval lors d'une phase de poussée et un flux d'air inverse de l'aval vers l'amont lors d'une phase d'inversion de poussée, ladite nacelle formant une révolution autour de l'axe longitudinal du turboréacteur et comprenant à son extrémité aval la sortie d'air, ladite sortie d'air comprenant une paroi intérieure aval, tournée vers l'axe longitudinal et configurée pour délimiter de manière extérieure la veine secondaire et pour guider le flux d'air secondaire et le flux d'air inverse, et une paroi extérieure aval, opposée à la paroi intérieure aval et configurée pour guider un flux d'air extérieur circulant d'amont en aval, ladite paroi intérieure aval et ladite paroi extérieure aval étant reliées entre elles à l'aval par un bord de fuite.

L'invention est remarquable en ce que la sortie d'air comprend un dispositif de redressement comprenant une pluralité de volets montés sur le bord de fuite et s'étendant en saillie vers l'aval, chaque volet étant monté pivotant selon un axe de pivotement formant par rapport à l'axe longitudinal un angle de convergence compris entre 0° et 45° dans un plan radial, chaque volet étant monté pivotant entre :
- une position fermée, dans laquelle chaque volet s'étend selon l'axe de pivotement dans le prolongement aérodynamique du bord de fuite pour favoriser la phase de poussée, et
- au moins une position déployée, dans laquelle chaque volet s'étend dans un plan déployé formant un angle de déploiement par rapport à la position fermée autour de l'axe de pivotement, ledit angle de déploiement étant supérieur à 20°, afin de redresser le flux d'air inverse admis dans la sortie d'air, de manière à favoriser la phase d'inversion de poussée.

Grâce à l'invention, lors d'une phase d'inversion de poussée, le flux d'air extérieur prélevé au niveau de la sortie d'air de la nacelle pour former le flux d'air inverse circule entre les volets en position déployée, ce qui redresse l'écoulement avant son admission dans la veine secondaire. Le mouvement vrillé du flux d'air inverse engendré par les aubes de la soufflante au niveau de l'entrée d'air et transmis au flux d'air extérieur est ainsi modifié au niveau des volets, ce qui évite d'admettre un flux d'air inverse de mouvement vrillé dans la veine secondaire. Les performances en phase d'inversion de poussée sont ainsi augmentées, ce qui permet un freinage efficace, mais également protège du pompage et favorise l'opérabilité de l'aéronef en conditions météorologiques défavorables.

En outre, en position déployée, l'apparition de recirculation dans la veine secondaire au niveau de la sortie d'air est réduite, ce qui favorise également la phase d'inversion de poussée. Par ailleurs, en position déployée, le diamètre de la sortie d'air est augmenté, ce qui permet d'augmenter le débit de flux d'air inverse admis dans la veine secondaire. Enfin, en position fermée, les volets s'étendent dans le prolongement de la sortie d'air ce qui permet de conduire selon un profil aérodynamique le flux d'air secondaire vers l'extérieur et donc de maintenir les performances en phase de poussée.

De préférence, l'angle de convergence est inférieur à 20°, préférentiellement inférieur à 15° de manière à conserver les performances en phase de poussée et à ce qu'en phase d'inversion de poussée, l'admission du flux d'air inverse dans la veine secondaire soit sensiblement longitudinale pour la maximiser.

Selon un aspect préféré de l'invention, le dispositif de redressement comprend au moins 10 volets, de préférence au moins 30 volets. Un tel nombre de volets est suffisamment grand pour permettre de modifier efficacement le mouvement vrillé du flux d'air inverse en de nombreux points de la circonférence de la sortie d'air. De préférence, le nombre de volets est inférieur à 50 pour faciliter leur commande et leur assurer une taille suffisante pour garantir leur robustesse face à la turbulence de l'air extérieur et aux chocs et vibrations liés à un environnement aéronautique.

Selon un autre aspect préféré de l'invention, l'angle de déploiement est compris entre 30° et 135°, de préférence compris entre 40° et 90°. De préférence, l'angle de déploiement optimal varie entre 40° et 90°, dépendant du régime et du sens de giration du moteur ainsi que la quantité de flux d'air inverse que l'on souhaite admettre dans la veine secondaire. Un tel angle de déploiement permet avantageusement de modifier efficacement le mouvement vrillé du flux d'air inverse et d'assurer son admission dans la veine secondaire selon un profil sensiblement longitudinal.

Selon un aspect de l'invention, en position fermée, les volets sont montés convergents selon l'axe longitudinal orienté d'amont en aval. De tels volets présentent l'avantage d'augmenter la section de la sortie d'air en position déployée par comparaison avec la position fermée, ce qui augmente le débit de flux d'air inverse admis dans la sortie d'air.

Selon un aspect préféré de l'invention, chaque volet comprend, en position fermée, une paroi intérieure s'étendant dans le prolongement de la paroi intérieure aval de la sortie d'air de manière à guider le flux d'air intérieur et une paroi extérieure s'étendant dans le prolongement de la paroi extérieure aval de la sortie d'air de manière à guider le flux d'air extérieur, ladite paroi intérieure et ladite paroi extérieure étant reliées par un sommet formant une extrémité de fuite en position fermée. De manière avantageuse, chaque volet comporte en position fermée un profil effilé s'étendant dans la continuité de la sortie d'air, ce qui permet de conserver les performances en phase de poussée. En outre, en phase d'inversion de poussée, la paroi intérieure aval et la paroi extérieure aval de deux volets en regard délimitent un couloir de circulation pour le flux d'air extérieur avant d'être admis dans la veine secondaire. De tel couloirs de circulation favorisent avantageusement l'écoulement du flux d'air inverse suivant une direction sensiblement longitudinale dans la veine secondaire.

Selon un premier aspect de l'invention, en position fermée, les volets sont montés de manière adjacente les uns aux autres de manière à former ensemble un anneau d'axe longitudinal. De manière avantageuse, en position fermée, un tel dispositif de redressement reproduit la sortie d'air de l'art antérieur et conserve ainsi les performances en phase de poussée. En phase d'inversion de poussée, un tel dispositif de redressement permet de modifier le mouvement vrillé du flux d'air inverse de manière globale sur toute la circonférence de la sortie d'air.

De préférence, les volets sont équirépartis sur le bord de fuite pour modifier le mouvement vrillé du flux d'air inverse de manière homogène sur toute la circonférence de la sortie d'air.

Selon un aspect de l'invention, les volets comprenant une largeur définie comme leur longueur circonférentielle en position fermée, les volets se chevauchent en position fermée, de préférence partiellement, de préférence sur moins de 25% de leur largeur. Avantageusement, un tel chevauchement garantit l'étanchéité du dispositif de redressement en phase de poussée, c'est-à-dire lorsque les volets sont en position fermée.

Selon un deuxième aspect de l'invention, le dispositif de redressement comprend au moins une languette montée fixe sur le bord de fuite et s'étendant en saillie vers l'aval, ladite languette et les volets en position fermée étant montés de manière adjacente les uns aux autres de manière à former ensemble un anneau d'axe longitudinal. De préférence, le dispositif de redressement comprend une pluralité de languettes montées fixes sur le bord de fuite et s'étendant en saillie vers l'aval, lesdites languettes et les volets en position fermée étant montés de manière adjacente les uns aux autres de manière à former ensemble un anneau d'axe longitudinal. De manière avantageuse, en position fermée, un tel dispositif de redressement reproduit la sortie d'air de l'art antérieur et conserve ainsi les performances en phase de poussée. En phase d'inversion de poussée, chaque languette augmente la résistance mécanique du dispositif de redressement. Un tel dispositif de redressement permet en outre de modifier le mouvement vrillé du flux d'air inverse de manière ciblée sur la circonférence de la sortie d'air.

De préférence, au moins une languette est disposée entre deux volets selon une direction circonférentielle afin d'assurer une résistance mécanique optimale du dispositif de redressement.

Selon un aspect, en position fermée, au moins un volet est en butée radiale contre une languette, de préférence sur moins de 25% de sa largeur définie comme sa longueur circonférentielle en position fermée. De manière avantageuse, une languette permet à la fois d'augmenter la robustesse du dispositif de redressement mais également de servir de butée pour les volets en position fermée. Autrement dit, une languette permet de garantir l'étanchéité du dispositif de redressement en phase de poussée en évitant que les volets ne s'ouvrent de manière inopportune.

Selon un aspect préféré, le dispositif de redressement comprend une alternance de volets et de languettes montés sur le bord de fuite selon une direction circonférentielle, pour modifier le mouvement vrillé du flux d'air inverse de manière homogène avec un dispositif de redressement robuste sur toute la circonférence de la sortie d'air.

Selon un autre aspect préféré, les volets sont montés sur une ou plusieurs portion(s) donnée(s) de la circonférence du bord de fuite afin de modifier le mouvement vrillé du flux d'air inverse de manière ciblée au niveau de la ou les portion(s) donnée(s). Un tel dispositif de redressement permet ainsi d'éliminer des zones de recirculation locales ciblées. De préférence, les languettes sont montées sur la ou les portion(s) complémentaire(s) sur lesquelles sont montées les volets, de manière à ce qu'en phase de poussée, le dispositif de redressement forme un anneau longitudinal d'axe X aérodynamique.

Selon un aspect, une languette s'étend sur une portion angulaire de la circonférence du bord de fuite formant un angle inférieur à 360°, de préférence inférieur à 30°.

Selon un aspect de l'invention, le dispositif de redressement comprend au moins un organe de pivotement configuré pour pivoter au moins un volet, de préférence un unique organe de pivotement configuré pour pivoter une pluralité de volets simultanément. De manière avantageuse, l'organe de pivotement permet de pivoter les volets de manière simple et pratique. L'utilisation d'un unique organe de pivotement permet en outre de pivoter les volets de manière simultanée et suivant le même angle de déploiement, ce qui favorise la phase de poussée et la phase d'inversion de poussée. De plus, un tel unique organe de pivotement facilite et raccourcit le temps de transition d'une phase de poussée à une phase d'inversion de poussée et inversement.

De préférence, le dispositif de redressement comprend des pivots sur lesquels sont montés les volets selon l'axe de pivotement, chaque pivot étant relié en amont à un organe de pivotement et s'étendant en aval en porte-à-faux. De tels pivots permettent de pivoter aisément les volets tout en présentant un encombrement minimal. Préférentiellement, les pivots comportent un diamètre supérieur à 10mm pour supporter les volets ainsi que la turbulence de l'air extérieur et les vibrations et chocs liés à l'environnement aéronautique.

Selon un aspect de l'invention, chaque volet est monté pivotant selon un axe de pivotement central audit volet. Autrement dit, chaque volet est monté sur un pivot centré par rapport à la largeur dudit volet. Un organe de pivotement fournit avantageusement un effort minimal pour passer d'une phase de poussée à une phase d'inversion de poussée et inversement.

Selon un aspect alternatif de l'invention, chaque volet comprenant une largeur définie comme sa longueur circonférentielle en position fermée, chaque volet est monté pivotant selon un axe de pivotement décentré par rapport à la largeur.

Selon un autre aspect alternatif de l'invention, chaque volet comprenant une portion de volet étendue et une portion de volet réduite séparées par l'axe de pivotement décentré, la portion de volet étendue est apte à être chevauchée en position fermée. De préférence, la portion de volet étendue de chaque volet est apte à être chevauchée par la portion de volet réduite d'un volet adjacent. De manière avantageuse, ceci permet de garantir l'étanchéité du dispositif de redressement en phase de poussée. En effet, le flux d'air secondaire circulant dans la veine secondaire exerce un effort de pression radial vers l'extérieur plus grand sur chaque portion de volet étendue ce qui génère un effort de pression radial vers l'intérieur sur chaque portion de volet réduite. Une portion de volet étendue qui tendrait à se déployer est ainsi retenue par la portion de volet réduite la chevauchant. En outre, de tels volets présentent l'avantage de pouvoir être rabattus de la position déployée à la position fermée sans l'aide d'un organe de pivotement en utilisant avantageusement le flux d'air secondaire et plus précisément l'effort radial vers l'extérieur qu'il exerce.

L'invention concerne également une nacelle pour turboréacteur d'aéronef à double flux, ledit turboréacteur s'étendant selon un axe longitudinal et comprenant une veine primaire radialement intérieure et une veine secondaire radialement extérieure dans laquelle circule un flux d'air secondaire de l'amont vers l'aval lors d'une phase de poussée et un flux d'air inverse de l'aval vers l'amont lors d'une phase d'inversion de poussée, ladite nacelle formant une révolution autour de l'axe longitudinal du turboréacteur et comprenant à son extrémité aval une sortie d'air telle que décrite précédemment.

L'invention concerne de plus un ensemble propulsif d'aéronef comprenant un turboréacteur d'aéronef à double flux s'étendant selon un axe longitudinal et comprenant une veine primaire radialement intérieure et une veine secondaire radialement extérieure dans laquelle circule un flux d'air secondaire de l'amont vers l'aval lors d'une phase de poussée et un flux d'air inverse de l'aval vers l'amont lors d'une phase d'inversion de poussée, ledit ensemble propulsif d'aéronef comprenant une nacelle telle que décrite précédemment montée sur le turboréacteur.

De préférence, le turboréacteur comporte des moyens d'inversion de poussée, préférentiellement une soufflante comprenant des aubes à pas variable. De préférence également, le turboréacteur comporte un taux de dilution supérieur à 16, c'est à dire que la nacelle comporte un grand diamètre. De manière avantageuse, un tel turboréacteur est performant en phase d'inversion de poussée car l'ensemble du flux d'air inverse admis dans la sortie d'air est redressé efficacement. L'inversion de poussée dans le cas d'une nacelle de grand diamètre ne peut en effet pas être réalisée efficacement par une ouverture de trappe et/ou grille formée dans la veine secondaire mais nécessite une soufflante à pas variable, qui ne pénalise pas la masse du turboréacteur. Le dispositif de redressement est adapté à une soufflante comprenant des aubes à pas variable en ce que les volets sont configurés pour modifier le mouvement vrillé qu'elle génère.

L'invention concerne par ailleurs un aéronef comprenant au moins un ensemble propulsif tel que décrit précédemment.

L'invention concerne par ailleurs un procédé d'utilisation d'un ensemble propulsif d'aéronef tel que décrit précédemment, dans lequel au moins un volet est en position fermée lors d'une phase de poussée du turboréacteur, le procédé comportant, lors d'une phase d'inversion de poussée dudit turboréacteur, au moins une étape de pivotement dudit volet de la position fermée vers la position déployée.

L'invention concerne en particulier un procédé d'utilisation d'un ensemble propulsif d'aéronef tel que décrit précédemment, dans lequel l'angle de calage des aubes de la soufflante du turboréacteur est adapté pour une phase de poussée et au moins un volet est en position fermée, le procédé comportant une étape de modification de l'angle de calage des aubes de la soufflante de manière à s'adapter à une phase d'inversion de poussée du turboréacteur et au moins une étape de pivotement dudit volet de la position fermée vers la position déployée.

De préférence, l'angle de calage des aubes de la soufflante du turboréacteur étant adapté pour une phase d'inversion de poussée et au moins un volet étant en position déployée, le procédé comporte une étape de modification inverse de l'angle de calage des aubes de la soufflante de manière à s'adapter à une phase de poussée dudit turboréacteur et au moins une étape de pivotement inverse dudit volet de la position déployée vers la position fermée.

De manière avantageuse, un tel procédé permet d'adapter le profil de la sortie d'air suivant que le turboréacteur d'aéronef est en phase de poussée ou en phase d'inversion de poussée, de manière à ce que le profil de la sortie d'air soit aérodynamique pour chacune des phases. En outre, le passage de la position fermée à la position déployée et inversement est réalisée de manière simple, pratique et rapide par simple pivotement.

De préférence, l'étape de pivotement est mise en oeuvre par l'organe de pivotement. De préférence, dans le cas d'un volet d'axe de pivotement central, l'étape de pivotement inverse est mise en oeuvre par l'organe de pivotement. De préférence, dans le cas d'un volet d'axe de pivotement décentré, l'étape de pivotement inverse est mise en oeuvre de manière autonome par le volet grâce au flux d'air secondaire et plus précisément l'effort de pression radial vers l'extérieur qu'il exerce.

De préférence, tous les volets sont pivotés lors de l'étape de pivotement et/ou l'étape de pivotement inverse, préférentiellement de manière simultanée, préférentiellement selon le même angle de déploiement.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
[Fig.1] est une représentation schématique longitudinale d'un ensemble propulsif d'aéronef lors d'une phase de poussée du turboréacteur à double flux selon l'art antérieur ;
[Fig.2] est une représentation schématique longitudinale de l'ensemble propulsif d'aéronef de la [Fig.1] lors d'une phase d'inversion de poussée du turboréacteur à double flux ;
[Fig.3] est une représentation schématique en demi-coupe longitudinale d'une nacelle de l'ensemble propulsif d'aéronef de la [Fig.2] ;
[Fig.4] est une représentation schématique longitudinale d'un ensemble propulsif d'aéronef lors d'une phase de poussée du turboréacteur à double flux selon une forme de réalisation de l'invention ;
[Fig.5] est une représentation schématique longitudinale de l'ensemble propulsif d'aéronef de la [Fig.4] lors d'une phase d'inversion de poussée du turboréacteur à double flux ;
[Fig.6] est une représentation schématique en demi-coupe longitudinale d'une nacelle de l'ensemble propulsif de la [Fig.5] ;
[Fig.7] et
[Fig.8] sont des représentations schématiques en perspective de la nacelle respectivement lors de la phase de poussée et lors de la phase d'inversion de poussée selon une forme de réalisation de l'invention ;
[Fig.9] et
[Fig.10] sont des représentations schématiques en perspective des volets de la nacelle respectivement lors de la phase de poussée et lors de la phase d'inversion de poussée selon une forme de réalisation de l'invention ;
[Fig.11] et
[Fig.12] sont des représentations schématiques en coupe transversale des volets de la nacelle selon deux formes de réalisation de l'invention ;
[Fig.13] et
[Fig.14] sont des représentations schématiques en perspective des volets de la nacelle respectivement lors de la phase de poussée et lors de la phase d'inversion de poussée selon une forme de réalisation alternative de l'invention et
[Fig.15] est une représentation schématique en coupe transversale des volets de la nacelle selon une forme de réalisation alternative de l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

En référence à la [Fig.4] et comme décrit dans le préambule, il est représenté un ensemble propulsif d'aéronef E comprenant un turboréacteur 1 à double flux s'étendant selon un axe longitudinal X et configuré pour permettre la propulsion de l'aéronef à partir de l'accélération d'un flux d'air circulant d'amont en aval dans chaque turboréacteur lors d'une phase de poussée P1, dit flux d'air intérieur F-INT. Par la suite, les termes « amont » et « aval » sont définis par rapport au sens de circulation du flux d'air intérieur F-INT lors d'une phase de poussée P1. Le turboréacteur 1 comprend une soufflante 5 montée rotative autour de l'axe longitudinal X et configurée, lors d'une phase de poussée P1 du turboréacteur 1, pour accélérer le flux d'air intérieur F-INT. Le turboréacteur 1 comprend également en aval de la soufflante 5 une veine primaire 6, radialement intérieure, et une veine secondaire 7, radialement extérieure, qui sont séparées par un carter 8. Le carter 8 est configuré pour guider une première partie du flux d'air intérieur F-INT, dite flux d'air primaire F1, dans la veine primaire 6 pour la combustion du carburant et une deuxième partie du flux d'air intérieur F-INT, dite flux d'air secondaire F2, dans la veine secondaire 7 afin de générer la poussée du turboréacteur 1. Par la suite, les termes « intérieur » et « extérieur » sont définis selon la direction radiale par rapport à l'axe longitudinal X.

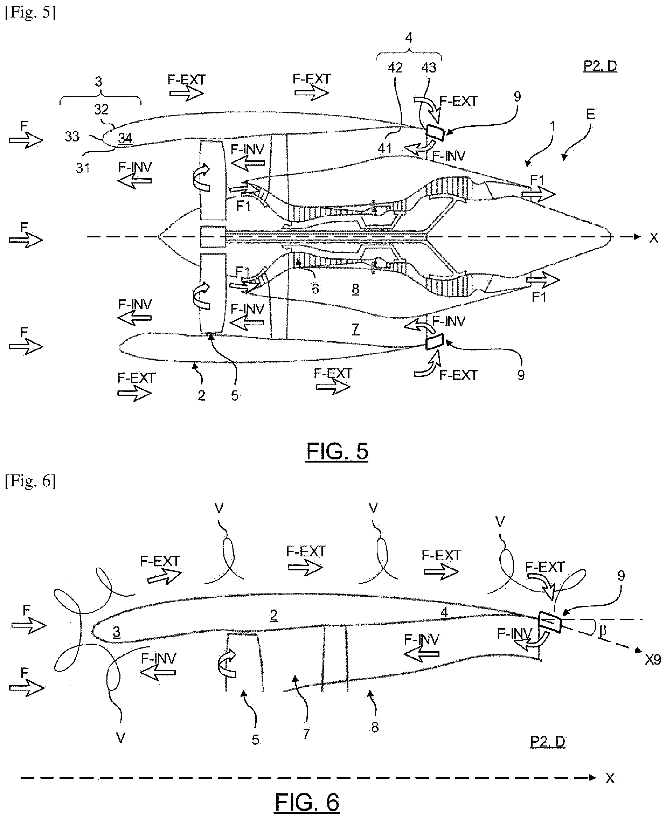

On considère par la suite que le turboréacteur 1 est à fort taux de dilution, c'est-à-dire que le rapport de la masse du flux d'air secondaire F2 sur la masse du flux d'air primaire F1 est supérieur à 16, et que la soufflante 5 est à pas variable, connue sous sa dénomination anglaise « Variable Pitch Fan », d'abréviation « VPF ». Comme illustré sur la [Fig.5], une telle soufflante 5 est configurée pour permettre une phase d'inversion de poussée P2 permettant la décélération de l'aéronef, notamment lors de l'atterrissage. Pour cela, la soufflante 5 comprend des aubes dont l'inclinaison angulaire est pilotée de manière à permettre d'inverser le sens de circulation du flux d'air secondaire F2 dans la veine secondaire 7. Lors d'une phase d'inversion de poussée P2, un flux d'air inverse F-INV circule ainsi de l'aval vers l'amont dans la veine secondaire 7, c'est-à-dire inversement au flux d'air secondaire F2 de la [Fig.4]. Il est présenté des moyens d'inversion de poussée se présentant sous la forme d'une soufflante à pas variable mais il va de soi que les moyens d'inversion de poussée pourraient avoir une forme différente.

En référence aux figures 4 et 5, l'ensemble propulsif d'aéronef E comprend en outre une nacelle 2 formant une révolution autour de l'axe longitudinal X de manière radialement extérieure à la soufflante 5 et délimitant de manière radialement extérieure la veine secondaire 7. La nacelle 2 comprend à son extrémité amont une entrée d'air 3 et à son extrémité aval une sortie d'air 4. L'entrée d'air 3 comprend une paroi intérieure amont 31 tournée vers l'axe longitudinal X et une paroi extérieure amont 32 opposée à la paroi intérieure amont 31, reliées ensemble à l'amont par une lèvre d'entrée d'air 33 comprenant un bord d'attaque, de manière à former une cavité annulaire amont 34.

Comme illustré sur la [Fig.4], lors d'une phase de poussée P1 du turboréacteur 1, l'entrée d'air 3 comporte un profil arrondi aérodynamique qui permet de séparer un flux d'air amont F en un flux d'air intérieur F-INT guidé par la paroi intérieure amont 31 et un flux d'air extérieur F-EXT guidé par la paroi extérieure amont 32. Lors d'une phase d'inversion de poussée P2 du turboréacteur 1, comme illustré sur la [Fig.6], la paroi intérieure amont 31 de l'entrée d'air 3 guide vers l'amont le flux d'air inverse F-INV ayant traversé successivement la veine secondaire 7 et la soufflante 5, de manière à ce qu'il s'oppose au flux d'air amont F, notamment de manière radialement extérieure, ce qui permet le freinage. Dans certains cas, de même qu'en phase de poussée P1, un flux d'air intérieur F-INT provenant du flux d'air amont F circule d'amont en aval dans la nacelle 200, de manière radialement intérieure et en sens inverse par rapport au flux d'air inverse F-INV, afin d'alimenter le flux d'air primaire F1. Le flux d'air primaire F1 peut également être alimenté par une partie du flux d'air inverse F-INV qui contourne le carter 800. Au niveau de l'entrée d'air 3, le flux d'air inverse F-INV guidé par la paroi intérieure amont 31 possède un mouvement vrillé V d'axe longitudinal généré par les aubes de la soufflante 5. Un tel mouvement vrillé V peut être transmis au flux d'air extérieur F-EXT guidé par la paroi extérieure amont 32 de l'entrée d'air 3 et s'écoulant d'amont en aval le long de la nacelle 2.

L'invention concerne plus particulièrement la sortie d'air 4 de la nacelle 2, qui, de manière analogue à l'entrée d'air 3 et en référence aux figures 4 et 5, comprend une paroi intérieure aval 41 tournée vers l'axe longitudinal X et une paroi extérieure aval 42 opposée à la paroi intérieure aval 41, reliées ensemble à l'aval par un bord de fuite 43.

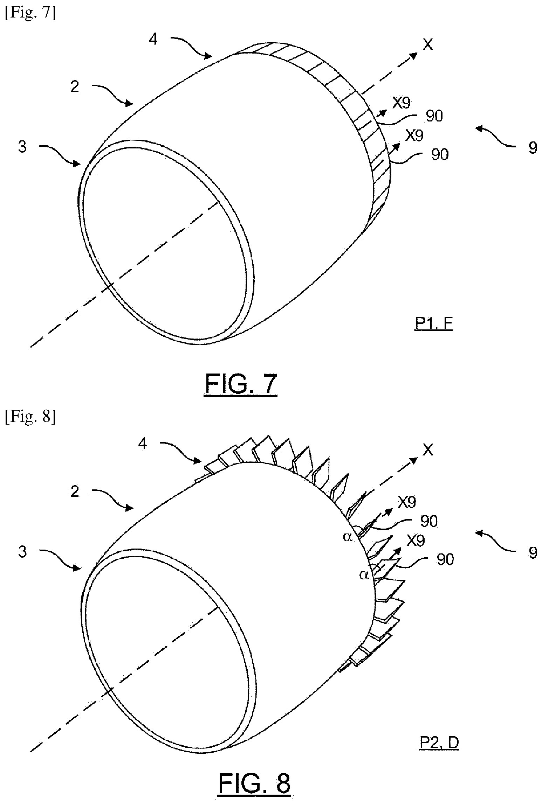

Selon l'invention, en référence aux figures 6, 7 et 8, la sortie d'air 4 comprend en outre un dispositif de redressement 9 comprenant une pluralité de volets 90 montés de manière circonférentielle sur le bord de fuite 43 et s'étendant en saillie vers l'aval. Chaque volet 90 est monté pivotant entre deux positions selon un axe de pivotement X9 formant par rapport à l'axe longitudinal un angle de convergence β compris entre 0° et 45° dans un plan radial. Les deux positions de chaque volet 90 sont :
- une position fermée F illustrée sur les figures 4 et 7, dans laquelle chaque volet 90 s'étend selon l'axe de pivotement X9 dans le prolongement aérodynamique du bord de fuite 43, et
- une position déployée D illustrée sur les figures 5, 6 et 8, dans laquelle chaque volet 90 s'étend dans un plan déployé formant un angle de déploiement α par rapport à la position fermée F autour de l'axe de pivotement X9, ledit angle de déploiement α étant supérieur à 20°.

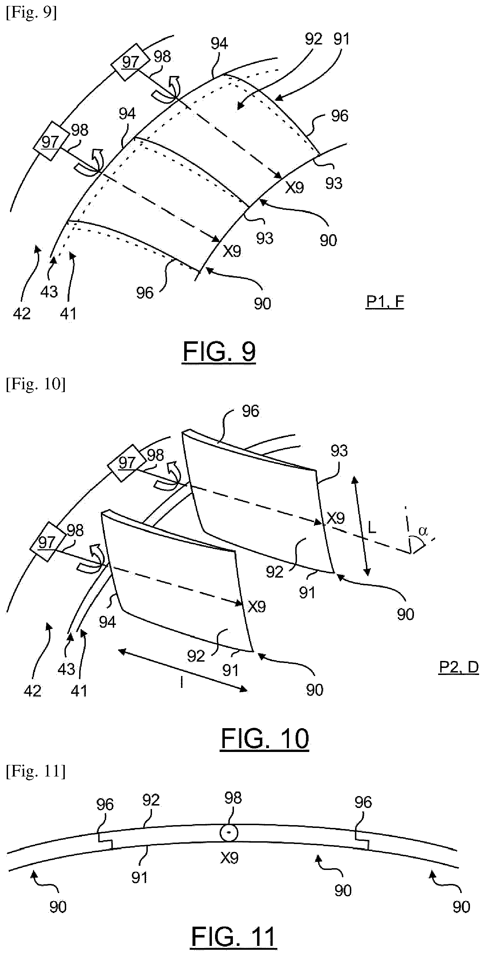

Pour réaliser le pivotement des volets 90 de la position fermée F à la position déployée D et inversement, le dispositif de redressement 9 comprend en outre un ou plusieurs organes de pivotement 97 ainsi que des pivots 98 (voir figures 9 et 10) sur lesquels sont montés les volets 90. Les pivots 98 sont reliés aux organes de pivotement 97 et s'étendent en porte à faux vers l'aval, comme cela sera détaillé par la suite.

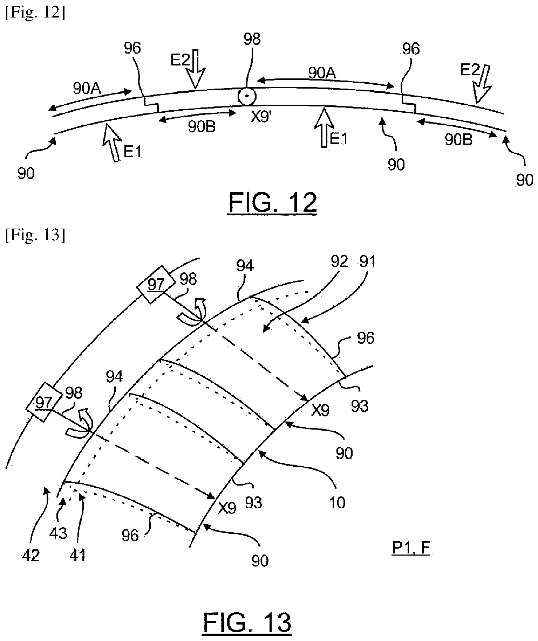

Dans certaines formes de réalisation de l'invention, le dispositif de redressement 9 comprend en outre une ou plusieurs languettes montées fixes sur le bord de fuite 43 entre des volets 90. Dans l'exemple décrit ci-dessous en référence aux figures 4 à 12, le dispositif de redressement 9 ne comprend que des volets 90. Un dispositif de redressement 9 comprenant des languettes entre des volets 90 est présenté ultérieurement en référence aux figures 13 à 15.

Grâce à l'invention, la sortie d'air 4 comporte un profil adapté et performant à la fois en phase de poussée P1, en plaçant les volets 90 en position fermée F, et en phase d'inversion de poussée P2, en plaçant les volets 90 en position déployée D.

En effet, lors d'une phase d'inversion de poussée P2, en référence à la [Fig.6], le flux d'air inverse F-INV circulant dans la veine secondaire 7 est admis au niveau de la sortie d'air 4 par prélèvement du flux d'air extérieur F-EXT. Plus précisément, le flux d'air extérieur F-EXT s'écoulant d'amont en aval le long de la nacelle 2 est guidé par la paroi extérieure aval 43 de la sortie d'air 4 puis traverse le dispositif de redressement 9 pour former le flux d'air inverse F-INV admis dans la veine secondaire 7. De manière avantageuse, le mouvement vrillé V du flux d'air extérieur F-EXT est modifié au passage du dispositif de redressement 9 ce qui permet de redresser le flux d'air inverse F-INV admis dans la sortie d'air 4. Un tel flux d'air inverse F-INV redressé augmente les performances en phase d'inversion de poussée P2. Le flux d'air inverse F-INV circule ainsi de manière opposée au flux d'air intérieur F-INT ce qui permet un freinage optimal, mais également protège le moteur d'un phénomène de pompage et favorise l'opérabilité de l'aéronef en conditions météorologiques défavorables.

De plus, le dispositif de redressement 9 empêche la formation de zones de recirculation R dans la veine secondaire au niveau de la sortie d'air comme illustré sur la [Fig.3] de l'art antérieur. En effet, le flux d'air extérieur F-EXT traverse le dispositif de redressement 9 en circulant entre les volets 90 au lieu de contourner le bord de fuite 43 comme dans l'art antérieur. Le dispositif de redressement 9 évite ainsi le décrochage du flux d'air extérieur F-EXT de la paroi extérieure aval 420 de la sortie d'air, à l'origine de la formation de zones de recirculation R.

Dans l'exemple des figures 7 et 8, lors d'une phase de poussée P1, le dispositif de redressement 9 s'étend dans le prolongement aérodynamique du bord de fuite 43 de la sortie d'air 4, c'est-à-dire qu'il se présente sensiblement sous la forme d'un anneau d'axe longitudinal X. De manière avantageuse, le flux d'air secondaire F2 de la veine secondaire 7 est guidé de manière aérodynamique vers l'extérieur du turboréacteur 1. De préférence et comme illustré sur la [Fig.6], le dispositif de redressement 9 forme un anneau convergent de l'amont vers l'aval. Ainsi, en position déployée D, la section de la sortie d'air 4 est augmentée par comparaison avec la position fermée F, ce qui permet d'augmenter le débit de flux d'air inverse F-INV dans la veine secondaire 7.

En pratique, l'angle de convergence β est de préférence inférieur à 20°, préférentiellement inférieur à 15°, comme illustré sur la [Fig.6], de manière à conserver les performances en phase de poussée P1 et à favoriser une admission sensiblement longitudinale du flux d'air inverse F-INV en phase d'inversion de poussée P2. En pratique également, l'angle de déploiement α est quant à lui de préférence compris entre 30° et 135°, préférentiellement compris entre 40° et 90°. L'angle de déploiement α optimal est choisi dans cette plage en fonction du régime et du sens de giration du moteur ainsi que de la quantité de flux d'air inverse F-INV que l'on souhaite admettre dans la veine secondaire 7.

On décrit par la suite plus précisément les caractéristiques structurelles et fonctionnelles du dispositif de redressement 9.

Dans l'exemple des figures 7 et 8, le dispositif de redressement 9 comprend une trentaine de volets 90 montés de manière circonférentielle sur le bord de fuite 43. De manière avantageuse, un tel nombre de volets 90 permet de modifier efficacement le mouvement vrillé V du flux d'air extérieur F-EXT, à savoir en chacune des positions des volets 90. Un couloir est délimité entre deux volets 90 adjacents en position déployée D pour guider le flux d'air extérieur F-EXT, et ainsi redresser efficacement le flux d'air inverse F-INV. Il va de soi qu'un tel nombre de volets 90 est adapté à une sortie d'air 4 de grand diamètre, c'est-à-dire de turboréacteur 1 à taux de dilution supérieur à 16 et qu'il pourrait être adapté à une sortie d'air 4 de plus petit diamètre. De préférence, le nombre de volets 90 est supérieur à 20, préférentiellement supérieur à 30 pour un redressement efficace du flux d'air inverse F-INV. De préférence également, le nombre de volets 90 est inférieur à 50 pour limiter l'encombrement, le coût et la masse embarquée.

Toujours dans l'exemple des figures 7 et 8, les volets 90 sont équirépartis sur la circonférence du bord de fuite 43 de la sortie d'air 4 afin d'obtenir un flux d'air inverse F-INV redressé de manière homogène en toute position radiale de la veine secondaire 7. Il va cependant de soi que les volets 90 pourraient être montés de manière plus rapprochée en une ou plusieurs portions de la circonférence du bord de fuite 43 où le mouvement vrillé V est plus intense. Inversement, les volets 90 pourraient être montés de manière plus distante en une ou plusieurs portions de la circonférence du bord de fuite 43 où le mouvement vrillé V est moins intense.

On décrit par la suite un unique volet 90, la description suivante étant valable pour chacun des volets 90 du dispositif de redressement 9. De préférence, tous les volets 90 sont identiques pour assurer un redressement homogène du flux d'air inverse F-INV. Il va cependant de soi, notamment dans le cas d'un mouvement vrillé V hétérogène en une ou plusieurs portions radiales de la circonférence du bord de fuite 43, qu'un ou plusieurs volets 90 peuvent avoir une forme et une taille différentes.

En référence aux figures 9 et 10, un volet 90 comprend, en position fermée F, une paroi intérieure 91 et une paroi extérieure 92 s'étendant respectivement dans le prolongement de la paroi intérieure aval 41 et de la paroi extérieure aval 42 de la sortie d'air 4. La paroi intérieure 91 et la paroi extérieure 92 sont reliées à l'aval par un sommet 93, à l'amont par une base 94 et latéralement par des bords latéraux 96.

Toujours en référence aux figures 9 et 10, la paroi intérieure 91 et la paroi extérieure 92 comportent une forme incurvée vers l'intérieur, telle que le diamètre du dispositif de redressement 9 à la position amont de la base 94 soit supérieur à son diamètre à la position aval du sommet 93. Une telle forme incurvée confère un profil aérodynamique à la sortie d'air 4 en phase de poussée P1. En effet, la paroi intérieure 91 et la paroi extérieure 92 guident respectivement le flux d'air intérieur F-INT et le flux d'air extérieur F-EXT en évitant tout décrochage. Une telle forme incurvée favorise également, en phase d'inversion de poussée P2, le prélèvement du flux d'air extérieur F-EXT pour former le flux d'air inverse F-INV. En effet, la forme incurvée ajoutée à l'angle de déploiement α des volets 90 délimite des couloirs de circulation aérodynamiques pour le flux d'air extérieur F-EXT, ce qui améliore le redressement.

Toujours en référence aux figures 9 et 10, le sommet 93 comporte une épaisseur radiale inférieure à celle de la base 94, de sorte que le dispositif de redressement 9 comporte un profil effilé vers l'aval reproduisant le profil effilé de la sortie d'air de l'art antérieur. Autrement dit, en position fermée F, le sommet 93 forme une extrémité de fuite correspondant au bord de fuite de la sortie d'air de l'art antérieur. De manière avantageuse, les performances en phase de poussée P1 sont conservées.

Toujours en référence aux figures 9 et 10, un volet 90 comporte une longueur 1 définie comme la distance longitudinale séparant la base 94 du sommet 93 qui est supérieure à 20cm, de manière à ce qu'en phase d'inversion de poussée P2, l'ensemble du flux d'air extérieur F-EXT destiné à former le flux d'air inverse F-INV traverse le dispositif de redressement 9. La longueur 1 d'un volet 90 est par ailleurs de préférence inférieure à 50cm, de manière à garantir sa robustesse et sa pérennité. En effet, une telle plage de longueur 1 limite l'effort exercé par la turbulence de l'air environnant ainsi que les vibrations et chocs liés à un environnement aéronautique sur un volet 90 monté en saillie sur le bord de fuite 43.

Toujours en référence aux figures 9 et 10, un volet 90 comporte une largeur L définie comme la distance circonférentielle séparant les bords latéraux 96 en position fermée F, qui est au moins égale au rapport de la circonférence du dispositif de redressement 9 sur le nombre de volets 90 dudit dispositif de redressement 9. De préférence, la largeur L d'un volet 90 est supérieure à un tel rapport, de manière à ce que les volets 90 se chevauchent en position fermée F. Autrement dit, la paroi intérieure 91 d'un volet 90 est en contact avec la paroi extérieure 92 d'un volet 90 adjacent.

Dans cet exemple, l'ensemble des volets 90 possèdent la même longueur 1 et la même largeur L afin d'obtenir un redressement homogène du flux d'air inverse F-INV mais il va de soi qu'un ou plusieurs volets pourraient avoir une longueur 1 et/ou une largeur L différente, en particulier pour obtenir un redressement ciblé sur une ou plusieurs portions angulaires de la circonférence du bord de fuite 43.

De manière avantageuse, le chevauchement des volets 90 garantit l'étanchéité du dispositif de redressement 9 lorsque les volets 90 sont en position fermée F. Le chevauchement des volets 90 facilite également avantageusement le pivotement des volets 90 de la position fermée F à la position déployée D et inversement, en s'entraînant les uns les autres. En effet, le déploiement d'un volet 90 entraîne celui du volet adjacent 90 et ainsi de suite. De préférence, le chevauchement est partiel, préférentiellement sur moins de 25% de la largeur L d'un volet 90, afin de limiter la masse embarquée du dispositif de redressement 9.

Dans l'exemple de la [Fig.11], pour éviter toute surépaisseur radiale locale liée au chevauchement, les volets 90 comportent des bords latéraux 96 d'épaisseur radiale amincie. Les bords latéraux 96 de volets adjacents 90 coopèrent ainsi avantageusement par complémentarité de formes afin de posséder une épaisseur radiale sensiblement constante à la périphérie. La paroi extérieure 92 et la paroi intérieure 91 d'un volet 90 s'étendent ainsi dans la continuité respectivement de la paroi extérieure 92 et de la paroi intérieure 91 des volets 90 adjacents. De manière avantageuse, de tels bords latéraux 96 d'épaisseur amincie génèrent un profil plus aérodynamique de la sortie d'air 4.

De préférence également, les volets 90 comportent un matériau composite afin de posséder une grande tenue mécanique notamment face aux chocs et vibrations liées à un environnement aéronautique tout en possédant une faible masse embarquée, ce qui facilite leur support en porte-à-faux.

On décrit par la suite plus précisément l'organe de pivotement 97 et le pivot 98 associés à chaque volet 90 et configurés ensemble pour réaliser le pivotement des volets 90 de la position fermée F à la position déployée D et inversement.

En référence aux figures 9 à 11 et comme décrit précédemment, chaque volet 90 est monté de manière fixe sur un pivot 98 selon l'axe de pivotement X9 du volet 90 considéré. Le pivot 98 est relié à un organe de pivotement 97 configuré pour l'entraîner en rotation autour de l'axe de pivotement X9 selon l'angle de déploiement α, de manière à pivoter le volet 90 de la position fermée F à la position déployée D, ou inversement.

De préférence, la sortie d'air 4 comporte des moyens de butée qui sont configurés pour limiter le déploiement angulaire à celui entre la position fermée F et la position déployée D. A titre d'exemple, les pivots 98 comprennent de préférence des pions en saillie configurés pour borner le pivotement des volets 90 en entrant en butée avec les organes de pivotement 97. Chaque pivot 98 comprend ainsi un premier pion formant une butée au niveau de la position déployée D maximale, lors du passage de la position fermée F à la position déployée D. De même, chaque pivot 98 comprend un deuxième pion formant une butée au niveau de la position fermée F lors du passage de la position déployée D à la position fermée F. Il va de soi que le déploiement angulaire pourrait être limité autrement que par des pions en butée au niveau des positions déployée D et fermée F.

Plus précisément, le pivot 98 s'étend en porte-à-faux vers l'aval depuis le bord de fuite 43 de la sortie d'air 4, ce qui permet de déplacer aisément et avec un faible encombrement le volet 90 associé. De préférence, le pivot 98 se présente sous la forme d'une tige, de manière à posséder une tenue mécanique suffisante ainsi qu'une faible masse embarquée. Le pivot 98 comporte de préférence de l'acier pour les mêmes raisons.

En référence aux figures 9 à 11, chaque organe de pivotement 97 est monté dans la sortie d'air 4, de manière à ne pas perturber l'écoulement du flux d'air extérieur F-EXT et du flux d'air inverse F-INV ainsi que pour limiter l'encombrement. Selon un aspect de l'invention, chaque volet 90 est relié à un pivot 98 lui-même relié à un organe de pivotement 97, de manière à pouvoir pivoter chaque volet 90 indépendamment, selon un angle de déploiement α propre. De préférence et comme illustré sur les figures 9 et 10, les organes de pivotement 97 sont reliés entre eux de manière à pivoter de manière simple et pratique simultanément les volets 90 de la position fermée F à la position déployée D, et inversement. Selon un autre aspect préféré de l'invention, les pivots 98 sont reliés à un unique organe de pivotement 97, se présentant à titre d'exemple sous la forme d'une roue d'axe longitudinal X. De manière avantageuse, une telle roue permet de déplacer, par simple pivotement, l'ensemble des volets 90 simultanément et d'un même angle de déploiement α. Une telle roue permet ainsi de modifier l'admission du flux d'air inverse F-INV de manière homogène sur la circonférence du bord de fuite 43.

De manière alternative, pour modifier l'admission du flux d'air inverse F-INV de manière hétérogène sur la circonférence du bord de fuite 43, par exemple pour supprimer des zones de recirculation locales, un unique organe de pivotement 97, tel qu'une roue, relié à des pivots 98 de différentes tailles est utilisé. De manière avantageuse, une telle roue permet de déplacer, par simple pivotement, l'ensemble des volets 90 simultanément selon un angle de déploiement α propre au pivot 98.

Dans l'exemple des figures 9 à 11, les volets 90 sont par ailleurs montés de manière centrée sur chaque pivot 98, de manière à ce que l'effort de pivotement fourni par un organe de pivotement 97 soit minimal.

Dans l'exemple de la [Fig.12] illustrant une forme alternative de l'invention, les volets 90 sont montés selon un axe de pivotement décentré X9' par rapport à la largeur L des volets 90. L'axe de pivotement décentré X9' de chaque volet 90 délimite ainsi une portion de volet réduite 90B et une portion de volet étendue 90A. De manière avantageuse, ceci permet de garantir l'étanchéité du dispositif de redressement 9 en phase de poussée P1. En effet, le flux d'air secondaire F2 circulant dans la veine secondaire 7 exerce un effort de pression radial vers l'extérieur E1 plus grand sur chaque portion de volet étendue 90A ce qui génère un effort de pression radial vers l'intérieur E2 sur chaque portion de volet réduite 90B. Une portion de volet étendue 90A qui tendrait à se déployer est ainsi retenue par la portion de volet réduite 90B la chevauchant, du fait de la somme des efforts s'exerçant sur chaque pivot 98. De manière avantageuse, la portion de volet étendue 90A est configurée pour être chevauchée par la portion de volet réduite 90B en position fermée F, notamment grâce aux bords latéraux 96 comprenant une épaisseur radiale amincie. Ainsi, il est possible de se passer d'organe de pivotement 97 pour pivoter les volets 90 de la position déployée D à la position fermée F, en utilisant astucieusement le flux d'air secondaire F2. Autrement, en cas de défaillance des organes de pivotement 97, les volets 90 sont naturellement déplacés en position fermée F par la circulation du flux d'air intérieur F-INT. Les performances restent ainsi optimales malgré la défaillance.

On décrit par la suite, selon une autre forme de réalisation de l'invention illustrée sur les figures 13 à 15, un dispositif de redressement 9 comprenant en plus des volets 90 une ou plusieurs languette(s) 99 montée(s) fixe(s) sur le bord de fuite 43 entre les volets 90. Chaque languette 99 est montée de manière à former avec les volets 90 un anneau d'axe longitudinal X. Autrement dit, une languette 99 s'étend de manière identique à un volet 90 en position fermée F.

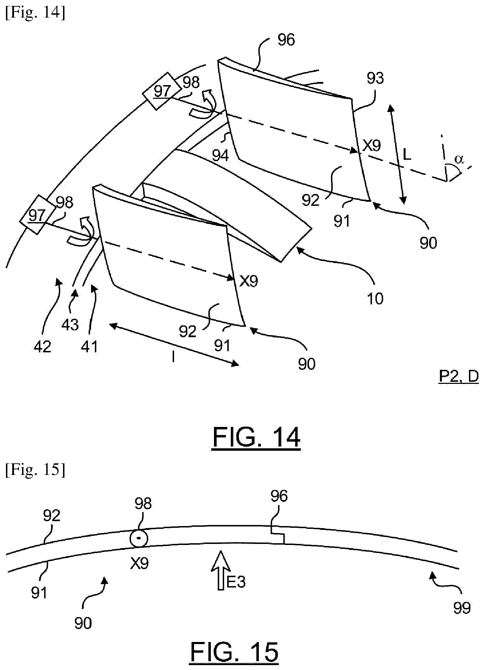

Selon une première configuration, le dispositif de redressement 9 comprend une alternance de volets 90 et de languettes 99, les languettes 99 ayant pour but d'augmenter la résistance mécanique du dispositif de redressement 9 face aux vibrations et chocs liés à un environnement aéronautique. De préférence, comme illustrée sur la [Fig.15], les volets 90 sont configurés pour venir en butée contre les languettes 99 en position fermée F, plus précisément en butée radiale E3. Les languettes 99 contribuent ainsi également à garantir l'étanchéité du dispositif de redressement 9 en position fermée F et à éviter que les volets 90 ne se déploient de manière inopportune. Dans l'exemple de la [Fig.15], la butée est mise en oeuvre par un chevauchement des volets 90 par les languettes 99. Un tel chevauchement est similaire à celui illustré sur les figures 11 et 12 et décrit précédemment. De même que pour les figures 11 et 12, les volets 90 sont configurés pour pivoter selon un axe de pivotement central X9 pour un pivotement d'effort minimal, tel qu'illustré sur la [Fig.15], ou selon un axe de pivotement décentré X9', permettant d'utiliser astucieusement le flux d'air secondaire F2 pour pivoter les volets 90 en position fermée F de manière autonome.

Selon une deuxième configuration, le dispositif de redressement 9 comprend des volets 90 montés sur une ou plusieurs portion(s) angulaire(s) de la circonférence du bord de fuite 43. Une ou plusieurs languettes 99 sont montées sur les portions angulaire(s) complémentaires. Une telle configuration permet de redresser le flux d'air inverse F-INV de manière ciblée au niveau des volets 90, de manière à supprimer des zones de recirculation locales identifiées à titre d'exemples. Dans une telle configuration, les languettes 99 ont pour rôle de conserver le profil aérodynamique de la sortie d'air 4 en phase de poussée P1, en formant avec les volets 90 un anneau d'axe longitudinal X.

De préférence, les languettes 99 ont une forme et une taille similaires à celles des volets 90, telles que décrites précédemment. En particulier, les languettes 99 comportent une extrémité de fuite similaire à celle des volets 90 et une longueur similaire. Il va de soi que les languettes peuvent toutefois être de forme et/ou de taille différente, en particulier leur largeur, qui dépend du redressement souhaité pour le flux d'air inverse F-INV et de la tenue mécanique nécessaire.

On décrit par la suite un procédé d'utilisation d'une sortie d'air 4 d'ensemble propulsif E d'aéronef comprenant un dispositif de redressement 9 tel que décrit précédemment, à savoir comprenant des volets 90 et éventuellement une ou plusieurs languettes 99 fixes. On considère que le turboréacteur d'aéronef est initialement en phase de poussée P1 et que les volets 90 du dispositif de redressement 9 sont en position fermée F. Autrement dit, le sommet 93 des volets 90 forment l'extrémité de fuite de la sortie d'air 4.

Lors d'une phase d'inversion de poussée P2, l'angle de calage des aubes de la soufflante 5 est modifié de manière à inverser le sens du flux d'air secondaire F2 circulant dans la veine secondaire 7 en le flux d'air inverse F-INV, de manière à favoriser une décélération de l'aéronef. Selon l'invention, parallèlement à la modification de l'angle de calage des aubes de la soufflante 5, les volets 90 sont pivotés d'un angle de déploiement α supérieur à 20°, par actionnement d'un ou plusieurs organes de pivotement 97, tel que par pivotement d'une roue reliée à l'ensemble des volets 90. Le pivotement d'une unique roue permet avantageusement de pivoter tous les volets 90 de manière simultanée, simple, rapide et suivant un même angle de déploiement α. Les volets 90 s'étendant initialement dans le prolongement du bord de fuite 43 de la sortie d'air 4 en position fermée F délimitent alors en position déployée D des couloirs d'écoulement pour le flux d'air extérieur F-EXT.

En position déployée D, les volets 90 redressent le mouvement vrillé V du flux d'air extérieur F-EXT de sorte à améliorer l'admission du flux d'air inverse F-INV dans la veine secondaire 7 et ainsi augmenter les performances en phase d'inversion de poussée P2. Les volets 90 empêchent en outre la formation de recirculation du flux d'air extérieur F-EXT en aval de la sortie d'air 4. Dans le cas d'un dispositif de redressement 9 avec des volets 90 convergents d'amont en aval et sans languette 99, les volets 90 en position déployée D augmentent en outre le diamètre de la sortie d'air 4, ce qui augmente le débit du flux d'air inverse F-INV admis. En effet, comme les volets 90 sont convergents, le diamètre de la sortie d'air 4 est défini entre les bords de fuite 43 et non plus entre les sommets 93 des volets 90.

Lors d'une nouvelle phase de poussée P1, l'angle de calage des aubes de la soufflante 5 est modifié de nouveau de manière à rétablir le flux d'air secondaire F2 s'écoulant d'amont en aval. Selon l'invention, parallèlement à la modification de l'angle de calage des aubes de la soufflante 5, les volets 90 sont pivotés en sens inverse du même angle de déploiement α de la position déployée D vers la position fermée F. Les volets 90 forment alors ensemble l'extrémité de fuite de la sortie d'air 4, éventuellement avec les languettes 99, et permettent de conserver les performances en phase de poussée P1 avec un profil aérodynamique.

Selon un mode de réalisation de l'invention, l'étape de pivotement des volets 90 de la position fermée F à la position déployée D et l'étape de pivotement inverse de la position déployée D à la position fermée F sont mises en oeuvre par un ou plusieurs organe(s) de pivotement 97. Selon un autre mode de l'invention, l'étape de pivotement inverse est mise en oeuvre de manière autonome par les volets 90, en exploitant avantageusement le flux d'air secondaire F2 et plus précisément l'effort radial qu'il génère sur les volets 90 pour les replier.

En conclusion, la sortie d'air 4 selon l'invention possède un profil adapté à chacune des phases de poussée P1 et d'inversion de poussée P2, aérodynamique de forme effilée vers l'aval en phase de poussée P1 et présentant des couloirs de circulation du flux d'air extérieur F-EXT en phase d'inversion de poussée P2. Une telle sortie d'air 4 améliore notablement les performances en phase d'inversion de poussée P2 en modifiant le mouvement vrillé V du flux d'air extérieur F-EXT engendré à l'amont par la soufflante 5 et en améliorant l'admission de la direction et du débit du flux d'air inverse F-INV dans la veine secondaire 7. Les volets 90 garantissent en outre l'étanchéité en position fermée F grâce au chevauchement des bords 96 et à l'axe de pivotement décentré X9'. L'ensemble des pivots 98 entraînés par une unique roue permet en outre de pivoter les volets 90 de manière rapide, simple, pratique et simultanée, tout en limitant l'encombrement et la masse embarquée, ce qui permet de s'adapter à des changements de phase rapides ou répétés. Les languettes 99 fixes améliorent en outre la tenue mécanique du dispositif de redressement, permettent de réaliser un redressement ciblé aux zones de recirculation identifiées et servent de butée pour les volets 90.

De manière préférée, pour former une sortie d'air 4 selon l'invention, on réduit la longueur d'une sortie d'air selon l'art antérieur pour prévoir les volets 90. L'encombrement longitudinal de la sortie d'air 4 reste avantageusement inchangé.

## Revendications

1. Sortie d'air (4) de nacelle (2) pour turboréacteur (1) à double flux, ledit turboréacteur (1) s'étendant selon un axe longitudinal (X) et comprenant une veine primaire (6) radialement intérieure et une veine secondaire (7) radialement extérieure dans laquelle circule un flux d'air secondaire (F2) de l'amont vers l'aval lors d'une phase de poussée (P1) et un flux d'air inverse (F-INV) de l'aval vers l'amont lors d'une phase d'inversion de poussée (P2), ladite nacelle (2) formant une révolution autour de l'axe longitudinal (X) du turboréacteur (1) et comprenant à son extrémité aval la sortie d'air (4), ladite sortie d'air (4) comprenant une paroi intérieure aval (41), tournée vers l'axe longitudinal (X) et configurée pour délimiter de manière extérieure la veine secondaire (7) et pour guider le flux d'air secondaire (F2) et le flux d'air inverse (F-INV), et une paroi extérieure aval (42), opposée à la paroi intérieure aval (41) et configurée pour guider un flux d'air extérieur (F-EXT) circulant d'amont en aval, ladite paroi intérieure aval (41) et ladite paroi extérieure aval (42) étant reliées entre elles à l'aval par un bord de fuite (43), sortie d'air **caractérisée par le fait qu'**elle comprend un dispositif de redressement (9) comprenant une pluralité de volets (90) montés sur le bord de fuite (43) et s'étendant en saillie vers l'aval, chaque volet (90) étant monté selon un axe de pivotement (X9, X9') formant par rapport à l'axe longitudinal (X) un angle de convergence (β) compris entre 0° et 45° dans un plan radial, chaque volet (90) étant monté pivotant entre :
- une position fermée (F), dans laquelle chaque volet (90) s'étend selon l'axe de pivotement (X9, X9') dans le prolongement aérodynamique du bord de fuite (43) pour favoriser la phase de poussée (P1), et
- au moins une position déployée (D), dans laquelle chaque volet (90) s'étend dans un plan déployé formant un angle de déploiement (α) par rapport à la position fermée (F) autour de l'axe de pivotement (X9, X9'), ledit angle de déploiement (α) étant supérieur à 20°, afin de redresser le flux d'air inverse (F-INV) admis dans la sortie d'air (4), de manière à favoriser la phase d'inversion de poussée (P2).

2. Sortie d'air (4) selon la revendication 1, dans laquelle en position fermée (F), les volets (90) sont montés convergents selon l'axe longitudinal (X) orienté d'amont en aval.

3. Sortie d'air (4) selon l'une des revendications 1 et 2, dans laquelle en position fermée (F), les volets (90) sont montés de manière adjacente les uns aux autres de manière à former ensemble un anneau d'axe longitudinal (X).

4. Sortie d'air (4) selon l'une des revendications 1 à 3, dans laquelle, les volets (90) comprenant une largeur (L) définie comme leur longueur circonférentielle en position fermée (F), les volets (90) se chevauchent en position fermée (F), de préférence partiellement, de préférence sur moins de 25% de leur largeur (L).

5. Sortie d'air (4) selon l'une des revendications 1 et 2, dans laquelle le dispositif de redressement (9) comprend au moins une languette (99) montée fixe sur le bord de fuite (43) et s'étendant en saillie vers l'aval, ladite languette (99) et les volets (90) en position fermée (F) étant montés de manière adjacente les uns aux autres de manière à former ensemble un anneau d'axe longitudinal (X).

6. Sortie d'air (4) selon la revendication 5, dans laquelle en position fermée (F), au moins un volet (90) est en butée radiale contre une languette (99), de préférence sur moins de 25% de sa largeur (L) définie comme sa longueur circonférentielle en position fermée (F).

7. Sortie d'air (4) selon l'une des revendications 1 à 6, dans laquelle le dispositif de redressement (9) comprend au moins un organe de pivotement (97) configuré pour pivoter au moins un volet (90), de préférence un unique organe de pivotement (97) configuré pour pivoter une pluralité de volets (90) simultanément.

8. Sortie d'air (4) selon l'une des revendications 1 à 7, dans laquelle chaque volet (90) est monté pivotant selon un axe de pivotement (X9) central audit volet (90).

9. Sortie d'air (4) selon l'une des revendications 1 à 7, dans laquelle, chaque volet (90) comprenant une largeur (L) définie comme sa longueur circonférentielle en position fermée (F), chaque volet (90) est monté pivotant selon un axe de pivotement décentré (X9') par rapport à la largeur (L).

10. Sortie d'air (4) selon la revendication 9, dans laquelle, chaque volet (90) comprenant une portion de volet étendue (90A) et une portion de volet réduite (90B) séparées par l'axe de pivotement décentré (X9'), la portion de volet étendue (90A) est apte à être chevauchée en position fermée (F).

11. Nacelle (2) pour turboréacteur (1) à double flux, ledit turboréacteur (1) s'étendant selon un axe longitudinal (X) et comprenant une veine primaire (6) radialement intérieure et une veine secondaire (7) radialement extérieure dans laquelle circule un flux d'air secondaire (F2) de l'amont vers l'aval lors d'une phase de poussée (P1) et un flux d'air inverse (F-INV) de l'aval vers l'amont lors d'une phase d'inversion de poussée (P2), ladite nacelle (2) formant une révolution autour de l'axe longitudinal (X) du turboréacteur (1) et comprenant à son extrémité aval une sortie d'air (4) selon l'une des revendications 1 à 10.

12. Ensemble propulsif (E) d'aéronef comprenant un turboréacteur (1) à double flux s'étendant selon un axe longitudinal (X) et comprenant une veine primaire (6) radialement intérieure et une veine secondaire (7) radialement extérieure dans laquelle circule un flux d'air secondaire (F2) de l'amont vers l'aval lors d'une phase de poussée (P1) et un flux d'air inverse (F-INV) de l'aval vers l'amont lors d'une phase d'inversion de poussée (P2), ledit ensemble propulsif (E) comprenant une nacelle (2) selon la revendication 11 montée sur le turboréacteur (1), et de préférence des moyens d'inversion de poussée, préférentiellement une soufflante (5) comportant des aubes à pas variable.

13. Procédé d'utilisation d'un ensemble propulsif (E) d'aéronef selon la revendication 12, dans lequel au moins un volet (90) est en position fermée (F) lors d'une phase de poussée (P1) du turboréacteur (1), le procédé comportant, lors d'une phase d'inversion de poussée (P2) dudit turboréacteur (1), au moins une étape de pivotement dudit volet (90) de la position fermée (F) vers la position déployée (D).

## Patentansprüche

1. Luftausströmer (4) für eine Gondel (2) eines Zweistrom-Flugzeugtriebwerks (1), wobei sich das Flugzeugtriebwerk (1) gemäß einer Längsachse (X) erstreckt und einen radial inneren primären Kanal (6) und einen radial äußeren sekundären Kanal (7) umfasst, in dem ein sekundärer Luftstrom (F2) von stromaufwärts nach stromabwärts bei einer Schubphase (P1) und ein umgekehrter Luftstrom (F-INV) von stromabwärts nach stromaufwärts bei einer Schubumkehrphase (P2) zirkuliert, wobei die Gondel (2) um die Längsachse (X) des Flugzeugtriebwerks (1) umlaufend ist und an ihrem stromabwärtigen Ende den Luftausströmer (4) umfasst, wobei der Luftausströmer (4) eine stromabwärtige Innenwand (41) umfasst, die zur Längsachse (X) zeigt und dazu ausgebildet ist, den sekundären Kanal (7) außen zu begrenzen und um den sekundären Luftstrom (F2) und den umgekehrten Luftstrom (F-INV) zu führen, und eine stromabwärtige Außenwand (42) gegenüber der stromabwärtigen Innenwand (41) und die dazu ausgelegt ist, einen äußeren Luftstrom (F-EXT) zu führen, der von stromaufwärts nach stromabwärts zirkuliert, wobei die stromabwärtige Innenwand (41) und die stromabwärtige Außenwand (42) stromabwärts durch eine Hinterkante (43) verbunden sind, wobei der Luftausströmer **dadurch gekennzeichnet ist, dass** er eine Richtvorrichtung (9) umfasst, die eine Vielzahl von Klappen (90) umfasst, die auf der Hinterkante (43) angebracht sind und sich nach stromabwärts hervorstehend erstrecken, wobei jede Klappe (90) gemäß einer Schwenkachse (X9, X9') angebracht ist, die im Verhältnis zur Längsachse (X) einen Konvergenzwinkel (β) bildet, der zwischen 0° und 45° in einer radialen Ebene liegt, wobei jede Klappe (90) schwenkend angebracht ist zwischen:
- einer geschlossenen Position (F), in der sich jede Klappe (90) gemäß der Schwenkachse (X9, X9') in der aerodynamischen Verlängerung der Hinterkante (43) erstreckt, um die Schubphase (P1) zu unterstützen, und
- mindestens einer geöffneten Position (D), in der sich jede Klappe (90) in einer geöffneten Ebene erstreckt, die einen Öffnungswinkel (α) im Verhältnis zu der geschlossenen Position (F) um die Schwenkachse (X9, X9') bildet, wobei der Öffnungswinkel (α) größer als 20° ist, um den im Luftausströmer (4) angenommenen umgekehrten Luftstrom (F-INV) derart zu richten, dass die Schubumkehrphase (P2) unterstützt wird.

2. Luftausströmer (4) nach Anspruch 1, wobei in geschlossener Position (F) die Klappen (90) konvergent gemäß der Längsachse (X) angebracht sind, die von stromaufwärts nach stromabwärts ausgerichtet ist.

3. Luftausströmer (4) nach einem der Ansprüche 1 und 2, wobei in geschlossener Position (F) die Klappen (90) einander benachbart derart angebracht sind, dass sie gemeinsam einen Ring in Längsachse (X) bilden.

4. Luftausströmer (4) nach einem der Ansprüche 1 bis 3, wobei sich die Klappen (90), wobei die Klappen (90) eine Breite (L) umfassen, die wie ihre Umfangslänge in geschlossener Position (F) definiert ist, in geschlossener Position (F) vorzugsweise teilweise, vorzugsweise über weniger als 25 % ihrer Breite (L) überlappen.

5. Luftausströmer (4) nach einem der Ansprüche 1 und 2, wobei die Richtvorrichtung (9) mindestens einen Lappen (99) umfasst, der fest auf der Hinterkante (43) angebracht ist und sich nach stromabwärts hervorstehend erstreckt, wobei der Lappen (99) und die Klappen (90) in geschlossener Position (F) einander benachbart derart angebracht sind, dass sie gemeinsam einen Ring in Längsachse (X) bilden.

6. Luftausströmer (4) nach Anspruch 5, wobei in geschlossener Position (F) mindestens eine Klappe (90) in radialem Anschlag an einem Lappen (99) ist, vorzugsweise über weniger als 25 % ihrer Breite (L), die wie ihre Umfangslänge in geschlossene Position (F) definiert ist.

7. Luftausströmer (4) nach einem der Ansprüche 1 bis 6, wobei die Richtvorrichtung (9) mindestens ein Schwenkorgan (97) umfasst, das dazu ausgelegt ist, mindestens eine Klappe (90) zu schwenken, vorzugsweise ein einziges Schwenkorgan (97), das dazu ausgelegt ist, eine Vielzahl von Klappen (90) gleichzeitig zu schwenken.

8. Luftausströmer (4) nach einem der Ansprüche 1 bis 7, wobei jede Klappe (90) gemäß einer zu der Klappe (90) zentralen Schwenkachse (X9) schwenkend angebracht ist.

9. Luftausströmer (4) nach einem der Ansprüche 1 bis 7, wobei jede Klappe (90), wobei jede Klappe (90) eine Breite (L) umfasst, die wie ihre Umfangslänge in geschlossener Position (F) definiert ist, gemäß einer im Verhältnis zur Breite (L) dezentrierten Schwenkachse (X9') schwenkend angebracht ist.

10. Luftausströmer (4) nach Anspruch 9, wobei jede Klappe (90) einen erweiterten Klappenabschnitt (90A) und einen reduzierten Klappenabschnitt (90B) umfasst, die durch die dezentrierte Schwenkachse (X9') getrennt sind, wobei der erweiterte Klappenabschnitt (90A) imstande ist, in geschlossener Position (F) überlappt zu sein.

11. Gondel (2) für ein Zweistrom-Flugzeugtriebwerk (1), wobei sich das Flugzeugtriebwerk (1) gemäß einer Längsachse (X) erstreckt und einen radial inneren primären Kanal (6) und einen radial äußeren sekundären Kanal (7) umfasst, in dem ein sekundärer Luftstrom (F2) von stromaufwärts nach stromabwärts bei einer Schubphase (P1) und ein umgekehrter Luftstrom (F-INV) von stromabwärts nach stromaufwärts bei einer Schubumkehrphase (P2) zirkuliert, wobei die Gondel (2) um die Längsachse (X) des Flugzeugtriebwerks (1) umlaufend ist und an ihrem stromabwärtigen Ende den Luftausströmer (4) nach einem der Ansprüche 1 bis 10 umfasst.

12. Antriebseinheit (E) eines Fluggeräts, umfassend ein Zweistrom-Flugzeugtriebwerk (1), das sich gemäß einer Längsachse (X) erstreckt und einen radial inneren primären Kanal (6) und einen radial äußeren sekundären Kanal (7) umfasst, in dem ein sekundärer Luftstrom (F2) von stromaufwärts nach stromabwärts bei einer Schubphase (P1) und ein umgekehrter Luftstrom (F-INV) von stromabwärts nach stromaufwärts bei einer Schubumkehrphase (P2) zirkuliert, wobei die Antriebseinheit (E) eine Gondel (2) nach Anspruch 11, die auf dem Flugzeugtriebwerk (1) angebracht ist, und vorzugsweise Schubumkehrmittel umfasst, vorzugsweise ein Gebläse (5), das Schaufeln mit veränderlicher Steigung aufweist.

13. Verfahren zur Verwendung einer Antriebseinheit (E) eines Fluggeräts nach Anspruch 12, wobei mindestens eine Klappe (90) in geschlossener Position (F) bei einer Schubphase (P1) des Flugzeugtriebwerks (1) ist, wobei das Verfahren bei einer Schubumkehrphase (P2) des Flugzeugtriebwerks (1) mindestens einen Schritt des Schwenkens der Klappe (90) aus der geschlossenen Position (F) in die geöffnete Position (D) aufweist.

## Claims

1. Air outlet (4) of a nacelle (2) for a bypass turbojet engine (1), said turbojet engine (1) extending along a longitudinal axis (X) and comprising a radially inner primary flow path (6) and a radially outer secondary flow path (7) wherein circulates a secondary air flow (F2) from upstream to downstream during a thrust phase (P1) and a reverse air flow (F-INV) from downstream to upstream during a reverse thrust phase (P2), said nacelle (2) forming a revolution around the longitudinal axis (X) of the turbojet engine (1) and comprising at its downstream end the air outlet (4), said air outlet (4) comprising a downstream inner wall (41), turned towards the longitudinal axis (X) and configured to externally delimit the secondary flow path (7) and to guide the secondary air flow (F2) and the reverse air flow (F-INV), and a downstream outer wall (42), opposite to the downstream inner wall (41) and configured to guide an outer air flow (F-EXT) circulating from upstream to downstream, said downstream inner wall (41) and said downstream outer wall (42) being connected together downstream by a trailing edge (43), air outlet **characterized by** the fact that it comprises a straightening device (9) comprising a plurality of flaps (90) mounted on the trailing edge (43) and extending projecting downstream, each flap (90) being mounted along a pivoting axis (X9, X9') forming with respect to the longitudinal axis (X) an angle of convergence (β) comprised between 0° and 45° in a radial plane, each flap (90) being pivotably mounted between:
- a closed position (F), wherein each flap (90) extends along the pivoting axis (X9, X9') in the aerodynamic extension of the trailing edge (43) to facilitate the thrust phase (P1), and
- at least one deployed position (D), wherein each flap (90) extends in a deployed plane forming an angle of deployment (α) with respect to the closed position (F) around the pivoting axis (X9, X9'), said angle of deployment (α) being greater than 20°, in order to straighten the reverse air flow (F-INV) admitted into the air outlet (4), so as to facilitate the reverse thrust phase (P2).

2. Air outlet (4) according to claim 1, wherein in closed position (F), the flaps (90) are mounted converging along the longitudinal axis (X) oriented from upstream to downstream.

3. Air outlet (4) according to one of claims 1 and 2, wherein in closed position (F), the flaps (90) are mounted adjacently with respect to one another so as to form together a ring of longitudinal axis (X).

4. Air outlet (4) according to one of claims 1 to 3, wherein, the flaps (90) comprising a width (L) defined as their circumferential width in closed position (F), the flaps (90) overlap in closed position (F), preferably partially, preferably over less than 25% of their width (L).

5. Air outlet (4) according to one of claims 1 and 2, wherein the straightening device (9) comprises at least one spline (99) fixedly mounted on the trailing edge (43) and extending projecting downstream, said spline (99) and the flaps (90) in closed position (F) being mounted adjacently with respect to one another so as to form together a ring of longitudinal axis (X).

6. Air outlet (4) according to claim 5, wherein in closed position (F), at least one flap (90) is in radial abutment against a spline (99), preferably over less than 25% of its width (L) defined as its circumferential width in closed position (F).

7. Air outlet (4) according to one of claims 1 to 6, wherein the straightening device (9) comprises at least one pivoting member (97) configured to pivot at least one flap (90), preferably a single pivoting member (97) configured to pivot a plurality of flaps (90) simultaneously.

8. Air outlet (4) according to one of claims 1 to 7, wherein each flap (90) is pivotably mounted along a pivoting axis (X9) central to said flap (90).

9. Air outlet (4) according to one of claims 1 to 7, wherein, each flap (90) comprising a width (L) defined as its circumferential width in closed position (F), each flap (90) is pivotably mounted along an off-centered pivoting axis (X9') with respect to the width (L).

10. Air outlet (4) according to claim 9, wherein, each flap (90) comprising an extended portion of flap (90A) and a reduced portion of flap (90B) separated by the off-centered pivoting axis (X9'), the extended portion of flap (90A) is able to be overlapped in closed position (F).

11. Nacelle (2) for bypass turbojet engine (1), said turbojet engine (1) extending along a longitudinal axis (X) and comprising a radially inner primary flow path (6) and a radially outer secondary flow path (7) wherein circulates a secondary air flow (F2) from upstream to downstream during a thrust phase (P1) and a reverse air flow (F-INV) from downstream to upstream during a reverse thrust phase (P2), said nacelle (2) forming a revolution around the longitudinal axis (X) of the turbojet engine (1) and comprising at its downstream end an air outlet (4) according to one of claims 1 to 10.

12. Aircraft propulsion assembly (E) comprising a bypass turbojet engine (1) extending along a longitudinal axis (X) and comprising a radially inner primary flow path (6) and a radially outer secondary flow path (7) wherein circulates a secondary air flow (F2) from upstream to downstream during a thrust phase (P1) and a reverse air flow (F-INV) from downstream to upstream during a reverse thrust phase (P2), said propulsion assembly (E) comprising a nacelle (2) according to claim 11 mounted on the turbojet engine (1), and preferably reverse thrust means, preferentially a fan (5) comprising variable pitch blades.

13. Method for using an aircraft propulsion assembly (E) according to claim 12, wherein at least one flap (90) is in closed position (F) during a thrust phase (P1) of the turbojet engine (1), the method comprising, during a reverse thrust phase (P2) of said turbojet engine (1), at least one step of pivoting said flap (90) from the closed position (F) to the deployed position (D).
